# EUROPEAN PATENT APPLICATION

(11) **EP 2 687 864 A1**
(43) Date of publication of application: **22.01.2014**
(21) Application number: 12460042.0
(22) Date of filing: 16.07.2012
(51) Int. Cl.: G01S 7/282, G01S 13/28

(54) **Method and apparatus for reduction of the subpulses reciprocal intermodulation in a complex electromagnetic pulse**

(71) Applicant: Bumar Elektronika Spolka Akcyjna, 04-051 Warszawa (PL)
(72) Inventor: Labudzinski, Aleksander, 02-372 Warszawa (PL); Zych, Mariusz, 05-310 Kaluszyn (PL); Luszczyk, Mariusz, 05-300 Minsk Mazowiecki (PL)

(57) **Abstract**

The invention relates to a method and an apparatus finding application in radar systems, in particular those generating and processing broadband radar pulses of constant amplitude with linear and nonlinear frequency modulation. A complex radar pulse consists of a number of subpulses of different carrier frequencies *ƒ_{C1}, ƒ_{CN}* and in case of insufficient frequency separation the subpulses reciprocal intermodulation occurs limiting detection range and causing false detections. Method consists in determining the low-pass representation (4) of a plurality N of radar subpulse signals wherein each radar subpulse signal is processed simultaneously; and then in time-multiplexing (5); limiting (6) amplitude fluctuations; shifting (8) frequency spectrum into original carrier frequencies and band-pass filtering (9) of the complex radar pulse modified according to preceding steps. Determining the low-pass representations of a plurality N of radar subpulse signals further comprises steps of sharing radar subpulse signals processing channel into a plurality N of processing channels, mixing the subpulse signal with a heterodyne generator signal and eliminating undesired results of signal mixing and reducing frequency spectrum of subpulses. The step of shifting the frequency spectrum comprises steps of selecting an adequate carrier frequency waveform, reading from mass data storage means the selected carrier frequency waveform and mixing the carrier waveform signal with low-pass representation of a radar subpulse signal. The step of time-multiplexing, limiting amplitude fluctuations and shifting the frequency spectrum are performed sequentially under a supervision of control means, and repeated so many times as the number of subpulses.

## Description

The present invention relates to a method and an apparatus for reduction of the subpulses reciprocal intermodulation in a complex electromagnetic pulse and finds application in radar systems, in particular those generating and processing broadband radar pulses of constant amplitude with linear and nonlinear frequency modulation.

It is well known that in order to achieve required range resolution in pulse radar systems the transmitted pulses must be modulated with the time compression on receive. The modulation is usually realized with the amplitude of the radiated signal kept constant to achieve high efficiency of power amplifiers of the transmission modules. Moreover digital signal processing allows discrete phase modulation methods to be applied widely. Many phase code techniques are described in literature though no universal solution exists that could satisfy the multiplicity of requirements. A formal method allowing design a phase coded waveform meeting a specified set of requirements is still a challenge. A complex radar pulse or a phase coded radiated waveform consists of a number of subpulses characterized by different carrier frequencies *f_{CI}..f_{CN}* and in case of insufficient frequency separation of particular subpulses an undesirable phenomena occurs namely reciprocal intermodulation of subpulses limiting detection range and causing false detections.

U.S. Pat. No. 7126526 to Wasiewicz discloses a method for reducing the interference between subpulses of a complex radiated waveform. The method is based on a phase modification in a required bandwidth range. Reduction of undesired components of pulse spectrum is obtained in the range of 20 dB after threefold iteration process algorithm.

U.S. Pat. No. 5731784 to Barron et al. discloses a method for forming bandwidth of a radar probing pulse utilizing pulse edge shaping. However the method introduces unfavorable phenomena of pulse amplitude modulation and does not find wide practical use.

The present invention has for a principle object the provision of means whereby the subpulses reciprocal intermodulation is reduced in an improved manner.

Another object of the invention is to provide an alternative reduction method of the subpulses reciprocal intermodulation to existing phase modification method and pulse shaping method.

Still another object is to provide such arrangements wherein the subpulses reciprocal intermodulation may be effectively reduced in a relatively simple way.

It is a further object of the invention to provide such arrangements in which a radar signal processing, aiming to reduce the subpulses reciprocal intermodulation, does not contribute to change its autocorrelation properties.

In a first aspect, the invention consists in a method for reduction of the subpulses reciprocal intermodulation in a complex electromagnetic pulse, the method comprising steps of generating a plurality *N* of subpulses forming the complex radar pulse, each subpulse having its original carrier frequency different from the other subpulses original carrier frequencies and providing the subpulses initial frequency separation; converting the complex radar pulse from analog to digital representation; generating a plurality *N* of carrier frequency waveforms, said waveforms residing in a form of digitized samples in a mass data storage means with parameters and coefficients stored in a non-volatile memory; filtering the complex radar pulse signal narrowing its frequency spectrum; converting the modified complex radar pulse signal from digital to analog form; wherein after converting the complex radar pulse signal into digital form the method includes steps of: determining the low-pass representation of a plurality *N* of radar subpulse signals with each radar subpulse signal being processed simultaneously; time-multiplexing of said radar subpulse signals low-pass representations; limiting the amplitude fluctuations of said radar subpulse signals low-pass representations; shifting the frequency spectrum of a plurality *N* of said radar subpulse signals low-pass representations into original carrier frequencies; and band-pass filtering of the complex radar pulse modified according to preceding steps. The step of determining the low-pass representations of a plurality *N* of radar subpulse signals further comprises stages of: sharing said radar subpulse signals processing channel into a plurality *N* of processing channels; mixing in each processing channel a radar subpulse signal with a heterodyne generator signal having a desired and unique frequency *f_{hI}...f_{hN}* different from frequencies of other heterodyne generator signals applied in other processing channels; and eliminating undesired results of signal mixing and reducing frequency spectrum of subpulses. The step of shifting the frequency spectrum of a plurality *N* of said low-pass representations of radar subpulse signals into original carrier frequency further comprises stages of: selecting from a plurality *N* of carrier frequency *f_{cI}*...*f_{cN}* waveforms an adequate carrier frequency waveform, reading from mass data storage means the selected carrier frequency waveform residing in a form of digitized samples in a nonvolatile memory bank, and mixing the carrier waveform signal with low-pass representation of a radar subpulse. The step of time-multiplexing said low-pass representations of radar subpulse signals, and the step of amplitude normalization of said low-pass representations of radar subpulse signals and the step of shifting the frequency spectrum of said low-pass representations of radar subpulse signals into original carrier frequencies are performed sequentially under a supervision of control means, and repeated so many times as the number of subpulses. Moreover during each sequence of said subpulse signal processing a carrier waveform is selected with different carrier frequency *f_{cI}...f_{cN}* matched to the original frequency of successive subpulse. Limiting the amplitude fluctuations of said radar subpulse signals low-pass representations is advantageously realized by the amplitude normalization of said radar subpulse signals low-pass representations. In each processing channel mixing a radar subpulse signal with a heterodyne generator signal and mixing the carrier waveform signal with low-pass representation of a radar subpulse signal is realized by multiplying these signals. Eliminating undesired results of signal mixing and reducing frequency spectrum of subpulses consists in low-pass filtering of a signal being a result of mixing radar subpulse signal with a heterodyne generator signal in each processing channel. The control means containing at least one control signal provide selection of the desired subpulse signal by a subpulse number counting and furthermore establishes required sequence of signal processing, synchronizes carrier frequency waveform generation from a digitally stored look-up table and couples particular carrier frequency waveform with an adequate subpulse signal.

In a second aspect, the invention consists in an apparatus for subpulses reciprocal intermodulation reduction in a complex electromagnetic pulse, the apparatus comprising means for generating a radar pulse, an analog to digital converter, signal mixing means, a heterodyne generator, a memory block, filter blocks, time-multiplexers, and digital to analog converter, in which the radar signal generator controlled by means of a trigger source has its output coupled to the input of an analog to digital converter, wherein the radar signal generator is sampled by a first clock signal, and the output of the analog to digital converter is coupled with a first signal mixing unit, comprising a plurality *N* of multiply nodes. Each multiply node has its first input connected to the analog to digital converter output and its second input coupled with a corresponding heterodyne generator, operating at carrier frequency of *f_{hI}...f_{hN}.* Each multiply node is coupled with a low-pass filter block in such a way that output of each multiply node is combined with a corresponding low-pass filter input, each low-pass filter having a clock source input on which a second oscillator signal is introduced. The outputs of a plurality *N* of low-pass filters are combined in a first multiplexer, said first multiplexer output is coupled with the input of the normalization unit. The normalization unit output is applied to the first input of the second signal mixing unit containing one multiplying node, and the second input of the second signal mixing unit is coupled with the output of the second multiplexer unit, wherein said second multiplexer combines a plurality *N* of inputs, each input introducing a signal waveform generator of different carrier frequency *f_{cI}...f_{cN}.* The output of the second signal mixing unit is applied to the input of a band-pass filter which output is connected to the input of a digital to analog converter. The same control means are applied to the control input of the first multiplexer, to the control input of the normalization unit and to the control input of the second multiplexer. The carrier frequency *f_{cI}...f_{cN}* waveform generators and heterodyne generators are implemented in a form of digitally stored look-up tables and may reside in at least one non-volatile memory bank, and generation of a desired waveform is carried out under control of an address counter, said address counter having at least two control inputs. The first control input of the address counter is connected with the first clock source and the second control input is coupled with the trigger means, said trigger means being the same trigger means that are applied to the radar signal generator.

Embodiments of the present invention will now be described, by way of example, with reference to the accompanying drawing in which:
Figure 1 is a block diagram of a pulse radar processing assignment according to the preferred embodiment of the invention in which the subpulses reciprocal intermodulation reduction method according to the present invention is implemented;
Figure 2a shows frequency spectrum of the complex radar pulse comprising three subpulses, where the nature of the magnitude of the *F0, FB* and *FA* subpulses can be visualized in frequency domain;
Figure 2b illustrates a complex radar pulse *A_{ORG}* in time domain, comprising a sequence of three linear frequency modulated subpulses *F0, FB, FA*;
Figure 3 is a plot of an original spectrum as well as the modified spectrum of the complex radar pulse where the modification process is realized according to the present invention utilizing a complex radar pulse comprising the three subpulses: *F0, FB, FA* separated in time;
Figure 4 presents the magnitude of the *F0* subpulse component versus time before and after a normalization process;
Figure 5 presents the magnitude of the *FA* subpulse component versus time before and after a normalization process;
Figure 6 presents the magnitude of the *FB* subpulse component versus time before and after a normalization process;
Figure 7 shows a plot in time domain of the modified modulation function of *F0* component in a form of instantaneous frequency values of the subpulse acquired in consequence of using the method according to the present invention;
Figure 8 shows a plot in time domain of the modified modulation function of *FA* component in a form of instantaneous frequency values of the subpulse acquired in consequence of using the method according to the present invention;
Figure 9 shows a plot in time domain of the modified modulation function of *FB* component in a form of instantaneous frequency values of the subpulse acquired in consequence of using the method according to the present invention; and
Figure 10 presents the comparison of the autocorrelation function magnitude of the *FB* subpulse before and after modification realized in accordance with the principles of the invention.

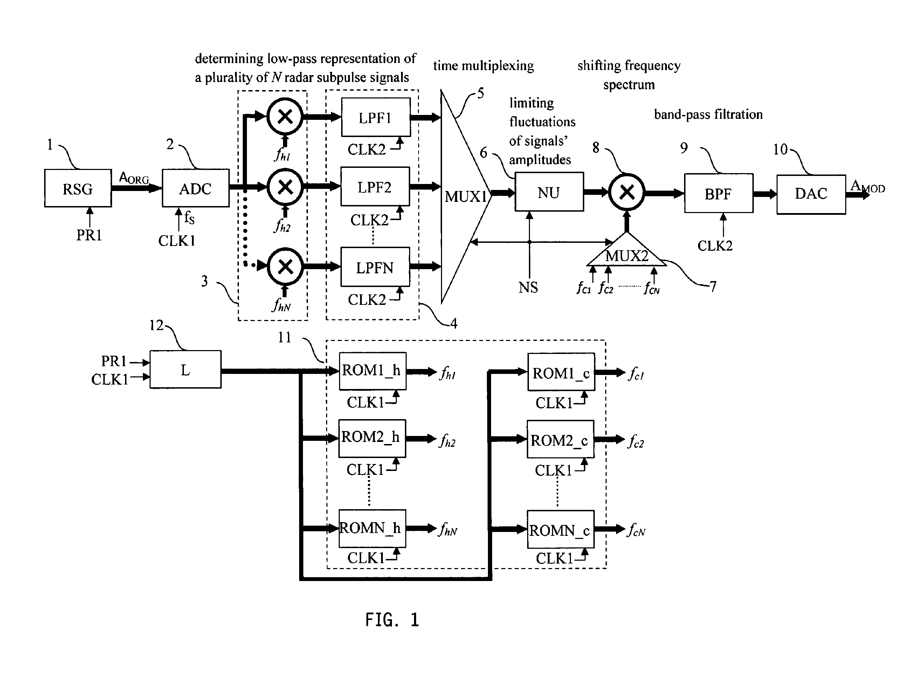

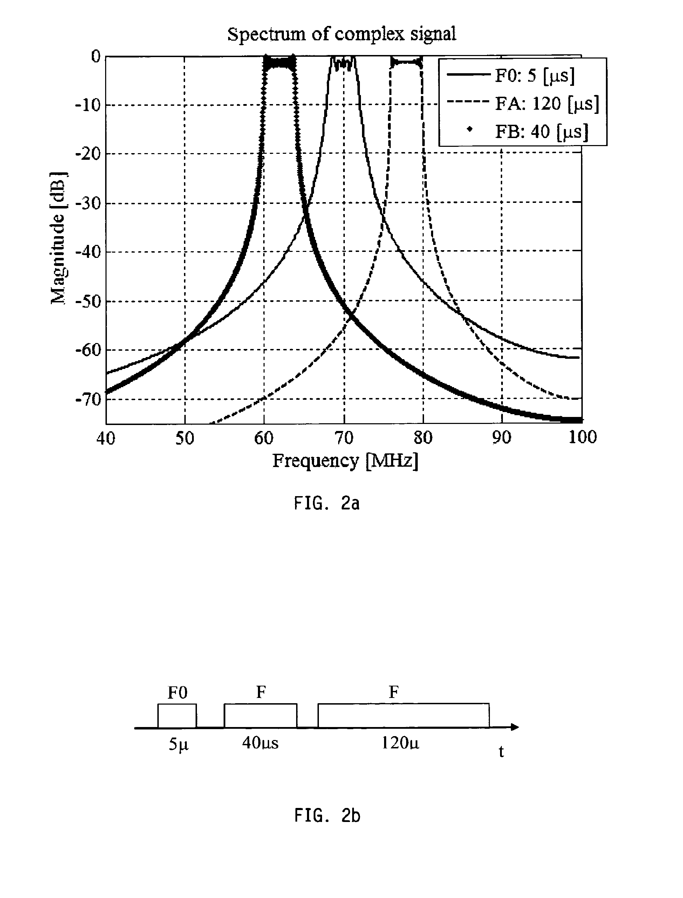

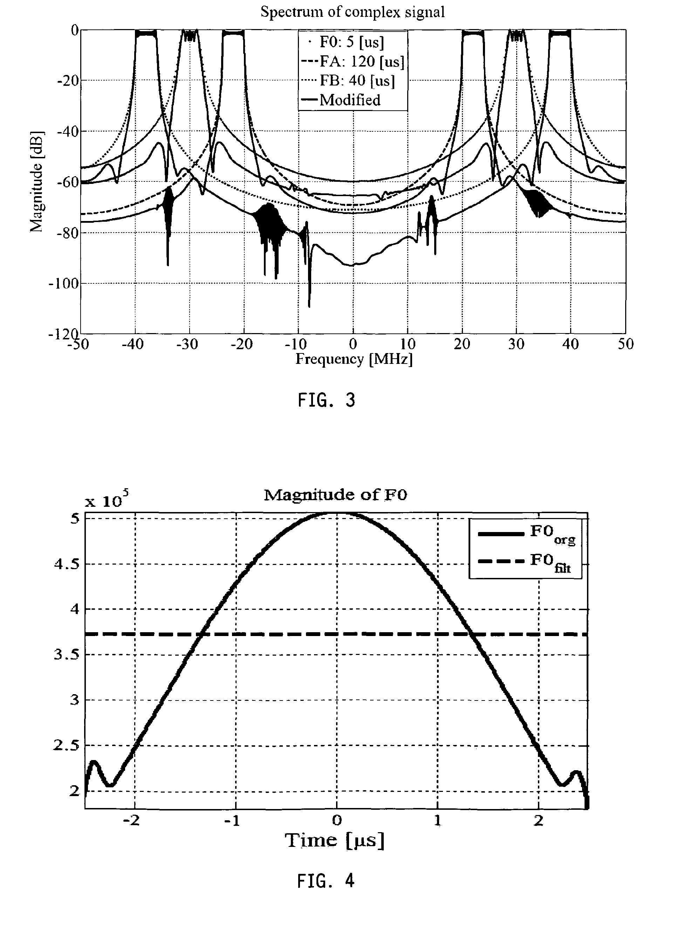

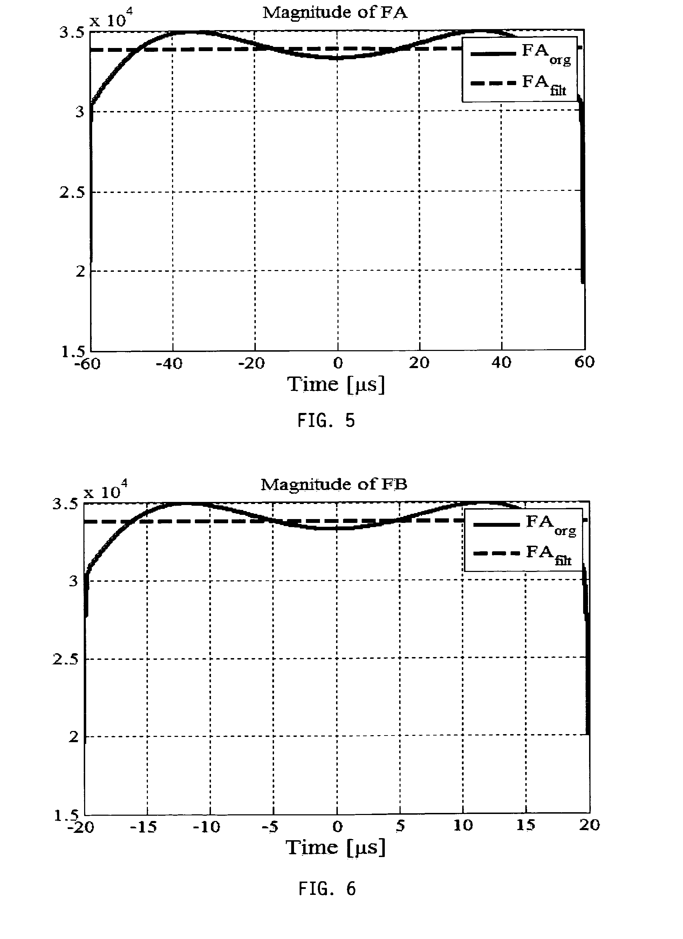

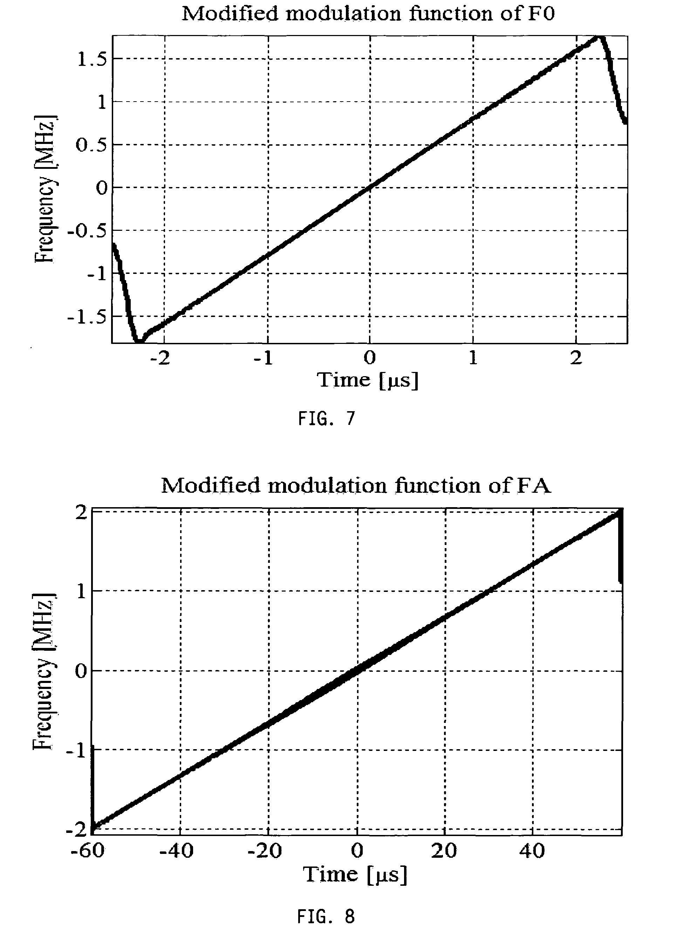

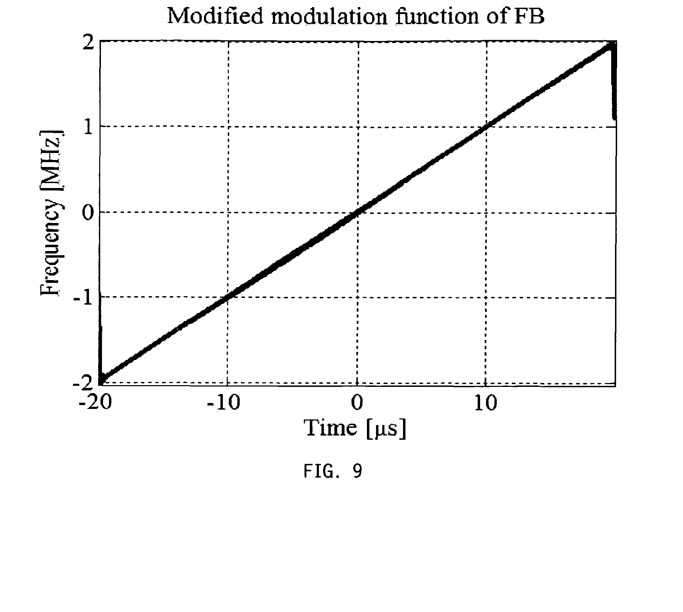

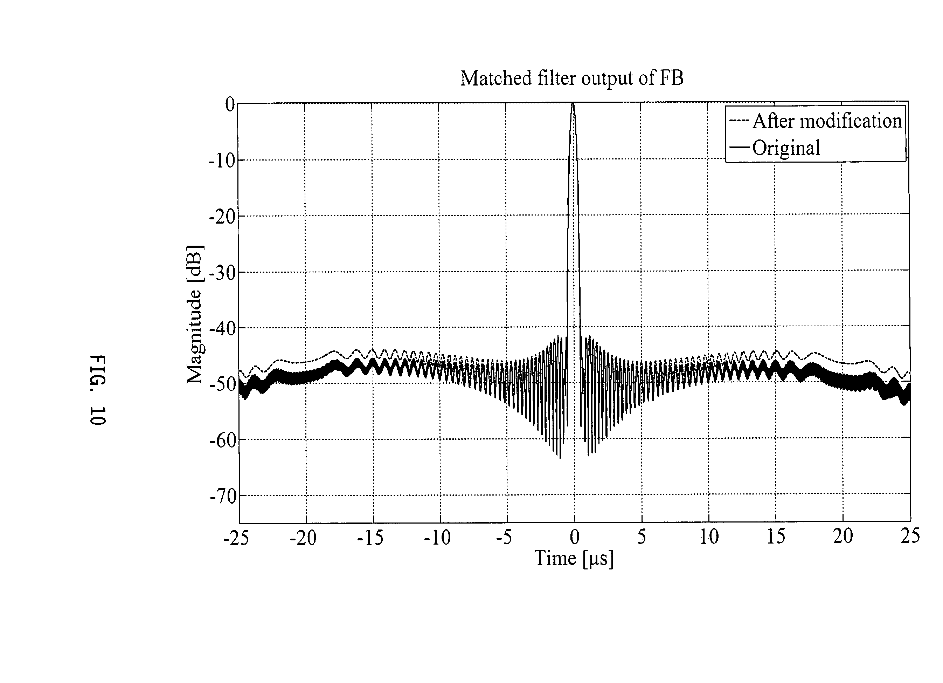

Referring to Figure 1 a method according to the present invention in a preferred embodiment includes step *1* in which a complex electromagnetic pulse *A_{ORG}* is generated in an analogue form in a radar signal generator *RSG*. The complex electromagnetic pulse is generated as a sequence of preferably three subpulses *F0, FB* and *FA* with linear frequency modulation, characterized by time duration of *5* µ*s, 40* µ*s* and *120* µ*s* respectively, frequency deviation of *4 MHz* and carrier frequency *f_{C}* value of *70 MHz, 62 MHz* and *78 MHz* respectively however it is no way intended to limit the invention or its application to different number of subpulses or other kind of modulation techniques including nonlinear methods, or different values of carrier frequencies *f_{C}*. The subpulses have frequency spectrum as shown in Fig. 2a. and are separated in time according to Fig. 2b. In step *2* the complex pulse *A_{ORG}* is digitized in an analog to digital converter *ADC* utilizing band-pass sampling method with sampling frequency *f_{S}* = *100 MHz.* Therefore, signal spectrum is shifted as shown in Fig. 3, and subpulses carrier frequencies are: (*f_{S} - f_{CI})* = *30 MHz* for the *F0* subpulse, (*f_{S}-f_{C2})* = *38 MHz* for the *FB* subpulse, and (*f_{S} - f_{C3})* = *22 MHz* for the *FA* subpulse. In order to obtain a radar signal's low-pass representation, in step *3* each subpulse signal is mixed with appropriate heterodyne generator signal, operating at frequency: *fₕ₁* = *30 MHz, fₕ₂* = *38 MHz, fₕ₃* = *22 MHz* respectively. Undesirable signal mixing products are filtered out in step *4* in three low-pass filtering units *LPF1, LPF2* and *LPF3.* Additionally, determining proper low-pass filter cutoff frequency, narrowed subpulse spectrum is obtained. However one can see, referring to solid line waveforms presented in Fig. 4, Fig. 5 and Fig. 6, that spectrum narrowing of the *F0_{org}, FA_{org}* and *FB_{org}* subpulses introduces undesired amplitude fluctuations. The most distortion is observed on both edges of waveforms, where the signal is characterized by the largest frequency values. Thus the filtered subpulses are in the next step *5* multiplexed in time domain by the *MUX1* unit and further processed in step *6* in an amplitude normalization unit *NU,* at the output of which the *F0_{filt}, FA_{filt}* and *FB_{filt}* subpulses are produced with magnitudes according to Fig. 4 - 6 presented as dashed lines. The nature of subpulse frequency instantaneous values can be visualized by referring to Fig. 7 - 9, where the three modulations are plotted as a function of time versus frequency showing dependence of the pulse width in microseconds versus frequency bandwidth in megahertz. In order to restore original values *f_{C}* of the subpulses' carrier frequencies, in step *7* the required carrier frequency generators are activated producing waveforms with frequencies: *f_{C1}* = *70 MHz, f_{C2}* = *62 MHz* and *f_{C3}* = *78 MHz* respectively. Then the output signal of the normalization unit is mixed in step 8 with the appropriate carrier frequency waveform, shifting the subpulse spectrum to the desired carrier frequency. Since the subpulses are processed with different carrier frequencies, the operation of the first mixing means *MUX1* and the normalization unit *NU* is coupled with the operation of the second mixing means *MUX2* and their adequate and synchronized performance can be obtained by means of the *NS* control signal. Thus time correlation between selection of the waveform with carrier frequency *f_{C1}* = *70 MHz* and selection of the *F0* subpulse is obtained as well as time correlation between selection of the waveform with carrier frequency *f_{C2}* = *62 MHz* and selection of the *FB* subpulse and processing the waveform with carrier frequency *f_{C3}* = *78 MHz* and processing of the *FA* subpulse is carried out in the same manner and signal mixing is performed in right order and expected sequence. Undesirable harmonic mixing products are filtered out in a band-pass filter *BPF* in step *9* whereas in step *10* the band-pass filtered signal is converted to analog form *A_{MOD}.* Considering the output signal *A_{MOD}* as the modified version of the original signal *A_{ORG},* generated previously in the radar signal generator *RSG,* advantageous capabilities have been achieved. The intermodulation level has been reduced and with reference to Fig. 2 one can see that *A_{MOD}* signal intermodulation level is less than *-40 dB.* The nature of the autocorrelation properties of the original complex radar signal *A_{ORG}* and the modified *A_{MOD}* signal can be visualized by referring to Fig. 10. As can be seen by comparison the autocorrelation functions are nearly identical.

An apparatus according to the present invention in a preferred embodiment presents disclosure in which the number of subpulses *N*=*3*, and it is to be understood that other embodiments for a radar pulse comprising *N=2* or *N>3* subpulses may be utilized, and that logical, mechanical and electrical changes may be made without departing the scope of the present invention. The apparatus comprises a *RSG* radar signal generator *1* controlled by means of a trigger signal *PR1.* The output of the *RSG* unit *1* is connected with an analog to digital converter *2*, the operation of which is clocked by a first oscillator *CLK1.* The output of the *ADC* converter is coupled with a first signal mixing block *3*. The block *3* comprises three multiplication nodes each node having its first input connected to the *ADC* output and its second input coupled with an adequate heterodyne generator source. The output of each multiply node is coupled with an input of corresponding low-pass filter block *LPF* and the *LPF* blocks are grouped in low-pass filter section *4*. Each low-pass filter block is fitted with a clock source input on which a second oscillator signal *CLK2* is introduced. The outputs of *LPF* filters are combined in a *MUX1* first multiplexer *5*, and its output is coupled with the input of the *NU* normalization unit *6*. The output of the *NU* block *6* is coupled with the first input of the second signal mixing block *8*, containing one multiplying node. The second input of the second signal mixing block *8* is coupled with the output of the *MUX2* second multiplexer *7*. The second multiplexer *7* combines three carrier frequency generators producing waveforms with different carrier frequencies. The output of the second mixing block *8* is applied to the input of the *BPF* band-pass filter 9, the operation of which is clocked by a second oscillator *CLK2.* The output of the filter 9 is passed to the digital to analog converter 10 input. At the output of the *DAC* unit 10 the electromagnetic signal *A_{MOD}* with reduced level of reciprocal intermodulation is obtained. The operation of the first multiplexer *5*, the normalization unit *6*, as well as the second multiplexer 7 is controlled by the subpulse number select signal *NS,* which is coupled with their control inputs. Signal waveform generators operating at carrier frequencies *f_{CI}*...*f_{CN}* and heterodyne generators operating at frequencies *f_{hI}...f_{hN}* reside in a *ROMN_h* and *ROMN_c* non-volatile memory bank *11*. Memory *ROMN_h* and *ROMN_c* is divided into six memory addressing spaces *ROM1_h...ROM3_h,* and *ROM1_c...ROM3_c* in relation to the number of subpulses *N*=*3*. Generation of the desired waveform is controlled by an address counter *12*, having two control inputs wherein the first input is coupled with the first clock source *CLK1* the second input is coupled with the trigger source *PR1*, the same trigger source that is also supplied to the radar signal generator *RSG*.

## Claims

1. A method for reduction of the subpulses reciprocal intermodulation in a complex electromagnetic pulse comprising steps of:
generating a plurality *N* of subpulses forming the complex radar pulse, each subpulse having its original carrier frequency different from the other subpulses original carrier frequencies and providing the subpulses initial frequency separation;
converting the complex radar pulse from analog to digital representation;
generating a plurality *N* of carrier frequency waveforms, said waveforms residing in a form of digitized samples in a mass data storage means with parameters and coefficients stored in a non-volatile memory;
filtering the complex radar pulse signal narrowing its frequency spectrum;
converting the modified complex radar pulse signal from digital to analog form,
**characterized in that** after converting the complex radar pulse signal into digital form the method includes steps of:
determining the low-pass representation of a plurality *N* of radar subpulse signals wherein each radar subpulse signal is processed simultaneously;
time-multiplexing of said plurality *N* of radar subpulse signals low-pass representations;
limiting the amplitude fluctuations of said plurality *N* of radar subpulse signals low-pass representations;
shifting the frequency spectrum of a plurality *N* of said radar subpulse signals low-pass representations into original carrier frequencies;
band-pass filtering of the complex radar pulse modified according to preceding steps; whereas the step of determining the low-pass representations of a plurality *N* of radar subpulse signals further comprises steps of:
sharing said radar subpulse signals processing channel into a plurality of *N* processing channels;
mixing in each processing channel a radar subpulse signal with a heterodyne generator signal having a desired and unique frequency *f_{hI}...f_{hN}* different from frequencies of other heterodyne generator signals applied in other processing channels;
and eliminating undesired results of signal mixing and reducing frequency spectrum of subpulses; moreover the step of shifting the frequency spectrum of a plurality *N* of said low-pass representations of radar subpulse signals into original carrier frequency further comprises steps of:
selecting from a plurality *N* of carrier frequency *f_{cI}...f_{cN}* waveforms an adequate carrier frequency waveform;
reading from mass data storage means the selected carrier frequency waveform residing in a form of digitized samples in a nonvolatile memory bank;
and mixing the carrier waveform signal with low-pass representation of a radar subpulse signal; where the step of time-multiplexing said low-pass representations of radar subpulse signals and the step of amplitude normalization of said low-pass representaions of radar subpulse signals and the step of shifting the frequency spectrum of a said low-pass representations of radar subpulse signals into original carrier frequencies are performed sequentially under a supervision of control means, and repeated so many times as the number of subpulses, and moreover during each sequence of said signal processing a carrier waveform is selected with different carrier frequency *f_{cI}...f_{cN}* matched to the original frequency of successive subpulse.

2. The method as in claim 1, **characterized in that** limiting the amplitude fluctuations of said plurality *N* of radar subpulse signals low-pass representations is realized by the amplitude normalization of said plurality *N* of radar subpulse signals low-pass representations.

3. The method as in claim 1, **characterized in that** mixing a radar subpulse signal with a heterodyne generator signal in each processing channel is realized by multiplying these signals.

4. The method as in claim 1, **characterized in that** mixing a carrier waveform signal with low-pass representation of a radar subpulse signal is realized by multiplying these signals.

5. The method as in claim 1, **characterized in that** eliminating undesired results of signal mixing and reducing frequency spectrum of subpulses consists in low-pass filtering of a signal being a result of mixing radar subpulse signal with a heterodyne generator signal in each processing channel.

6. The method as in claim 1, **characterized in that** control means containing at least one control signal provide selection of the desired subpulse signal by a subpulse number counting and furthermore establishes required sequence of signal processing, synchronizes generating carrier frequency waveforms from a digitally stored look-up table and couples particular carrier frequency waveform with an adequate subpulse signal.

7. An apparatus for reduction of the subpulses reciprocal intermodulation in a complex electromagnetic pulse, the apparatus comprising means for generating a radar pulse signal, an analog to digital converter, signal mixing means, a heterodyne generator, a memory block, filter blocks, time-multiplexers, and digital to analog converter, in which the radar signal generator (1) controlled by means of a trigger source has its output coupled to the input of an analog to digital converter (2), **characterized in that** the generator (1) is sampled by a first clock signal, and the output of the analog to digital converter is coupled with a first signal mixing unit (3), comprising a plurality *N* of multiply nodes, each multiply node having its first input connected to the analog to digital converter output and its second input coupled with a corresponding heterodyne generator operating at carrier frequency of *f_{hI}*...*f_{hN},* wherein each multiply node is coupled with a low-pass filter block (4) in such a way that output of each multiply node is combined with a corresponding low-pass filter input, each low-pass filter having a clock source input on which a second oscillator signal is introduced, and the outputs of a plurality *N* of low-pass filters (4) are combined in a first multiplexer (5), said first multiplexer output is coupled with the input of the normalization unit (6), said normalization unit output is applied to the first input of the second signal mixing unit (8), containing single multiplying node and the second input of the second signal mixing unit (8) is coupled with the output of the second multiplexer unit (7), wherein a second multiplexer (7) combines a plurality *N* of inputs, each input introducing a signal waveform generator of different carrier frequency *f_{cI}...f_{cN},* and the output of the second signal mixing unit (8) is applied to the input of a band-pass filter (9) which output is connected to a digital to analog converter (10), and wherein the same control means are applied to the control input of the first multiplexer (5), to the control input of the normalization unit (6) and to the control input of second multiplexer (7).

8. The apparatus as in claim 6, **characterized in that** said carrier frequency *f_{cI}...f_{cN}* waveform generators and heterodyne generators operating with carrier frequencies *f_{hI}...f_{hN}* are implemented in a form of digitally stored look-up tables that may reside in at least one non-volatile memory bank (11), and generation of a desired waveform is carried out under control of an address counter (12), said address counter having at least two control inputs, wherein to the first control input the first clock source is applied and the second control input is coupled with the trigger means, said trigger means being the same trigger means that are applied to the radar signal generator (1).
